# EUROPÄISCHE PATENTSCHRIFT

(11) **EP 1 965 889 B1**
(45) Veröffentlichungstag und Bekanntmachung des Hinweises auf die Patenterteilung: **24.11.2010**
(21) Anmeldenummer: 06791954.8
(22) Anmeldetag: 09.09.2006
(51) Int. Cl.: B01D 50/00, B01D 45/12

(54) **SYSTEM ZUR GASREINIGUNG**
SYSTEM FOR GAS CLEANING
SYSTEME D'EPURATION DE GAZ

(30) Priorität: 24.12.2005 DE 102005062245
(43) Veröffentlichungstag der Anmeldung: 10.09.2008
(73) Patentinhaber: Hydac Process Technology GmbH, 66538 Neunkirchen (DE)
(72) Erfinder: HERGES, Knut, 66583 Spiesen-Elversberg (DE); WNUK, Ralf, 66450 Bexbach/Kleinottweiler (DE)
(74) Vertreter: Bartels, Martin Erich Arthur
(86) Internationale Anmeldenummer: PCT/EP2006/008805
(87) Internationale Veröffentlichungsnummer: WO 2007/073783

(56) Entgegenhaltungen:
- WO-A2-2004/067148
- JP-A- 5 141 815
- JP-A- 8 144 733
- US-A- 5 950 672
- US-A1- 2001 005 986

## Beschreibung

Die Erfindung bezieht sich auf ein System zur Gasreinigung gemäß der Merkmalsausgestaltung des Oberbegriffes des Patentanspruches 1.

Systeme dieser Art, die nicht nur Verschmutzungen durch Feststoffbelastungen beseitigen sollen, sondern betreffende gasförmige Medien auch entfeuchten sollen, sind bekannt und werden, wenn eine Koalisierung von Flüssigkeitspartikeln an der innerhalb eines Gehäuses befindlichen Filtereinrichtung erfolgt, auch als Coalescer bezeichnet. Derartige Systeme werden oft in Verbindung mit abgaserzeugenden Prozessen benutzt, wobei Abgasströme verhältnismäßig hoher Temperaturen und gegebenenfalls mit sehr hohen Drücken gehandhabt werden.

Durch die WO 2004/067148 A2 ist ein gattungsgemäßes System zur Gasreinigung bekannt, das ein Gehäuse mit einem ersten Raum aufweist, in dem das zu reinigende Gas einströmbar ist und mit einem zweiten Raum, aus dem das gereinigte Gas austritt, wobei zwischen den genannten Räumen eine vom Gas durchströmbare Filtereinrichtung angeordnet ist, welche Filtermedien sowohl zur Absonderung von Feststoffpartikeln als auch zur Entfeuchtung des Gases durch Abscheidung koalisierter Flüssigkeit aufweist, wobei das System stromaufwärts der Filtereinrichtung eine Anordnung zur Vorentfeuchtung des Gases aufweist, in Form eines Zyklons, der in dem Gehäuse aufgenommen ist. Ferner weist das Gehäuse am oberen Ende einer den Zyklon mitbildenden Kreisringfläche einen den ersten Raum vom zweiten Raum trennenden Boden auf, an dem ein einen Durchgang bildender Sitz ausgebildet ist, in den ein in den inneren Hohlraum der Filtereinrichtung führender Anschlussstutzen der Filtereinrichtung einsetzbar ist, über den das vorentfeuchtete Gas aus dem Zyklon in den inneren Hohlraum der Filtereinrichtung einströmt.

Neben dem Anschlussstutzen weist der den ersten Raum vom zweiten Raum trennende Boden bei der der bekannten Lösung eine Ventileinrichtung auf, die mit ihrer einen Seite in den Anschlussstützen des Zyklons und auf der anderen Seite in den zweiten Raum einmündet, der bis auf Fluidauslassstellen für das gefilterte und insoweit abgereinigte Fluid keine weiteren Durchlassstellen zur Umgebung hin aufweist. Dieser insoweit nach außen hin abgeschlossene Raum dient der Aufnahme von Feststoff-Partikelverschmutzungen, die sich auf der Oberseite des trennenden Bodens ablagern und bei einem gewissen Anfall an den genannten Feststoffverschmutzungen unter Einbezug gewisser Mengen an koalisierter Flüssigkeit öffnet die tellerartige Ventileinrichtung und die Verschmutzungspartikel können zusammen mit Resten an koalisierter Flüssigkeit über den genannten Anschlussstutzen und einen weiteren am unteren Ende des Gehäuses angeordneten Auffangbehälter aus der Vorrichtung zentral abgeführt werden. Die dahingehende Schmutzpartikeiabfuhr setzt voraus, dass das System zur Gasreinigung vollständig abgeschaltet wird oder jedenfalls nur mit einem derart geringen Leistungsvermögen gefahren wird, dass im Anschlussstutzen des Zyklons ein Druckabfall dergestalt eintreten kann, dass der tellerartige Ventilkörper der Ventileinrichtung auch öffnet, der ansonsten unter dem Betriebsdruck des Systems in seiner schließenden Anlage gehalten ist. Für eine erfolgreiche Partikelschmutzentfernung ist also das bekannte System zur Gasreinigung nur in diskontinuierlicher Weise zu betreiben oder bei verminderter Leistung. Dies steht einer besonders guten Reinigungswirkung entgegen.

Durch die JP 05141815 A ist ein Ölseparator bekannt mit einem Gehäuse, das über einen trennenden Boden in im wesentlichen zwei Gehäusehälften unterteilt ist, wobei die untere Gehäusehälfte als Zyklon dient und in der oberen Gehäusehälfte ist eine Filtereinrichtung eingesetzt, die an ihrer unteren Endkappe einen Anschlussstutzen aufweist, der den trennenden Boden durchgreift und mit seinem einen freien Ende in den Zyklon mündet und mit seinem anderen freien Ende in den inneren Hohlraum der Filtereinrichtung eingreift. Insoweit ist der Anschlussstutzen einstückiger Bestandteil der Endkappe der Filtereinrichtung.

In Übereinstimmung mit dem kennzeichnenden Teil des Patentanspruches 1 weist diese bekannten Zyklonabscheidelösung oberhalb des trennenden Bodens in der Wand des Gehäuses eine Entleerungsöffnung auf, die es erlaubt die koalisierte Flüssigkeit aus dem System nach außen hin abzuführen. Da relativ große Mengen an koalisierter Flüssigkeit beim Filtrationsbetrieb anfallen können, ist der obere Gehäuseraum entsprechend groß dimensioniert, um derart ein großes Kammervolumen zur Ansammlung von an der Filtereinrichtung koalisierter Flüssigkeit auszubilden. Bei vorgebbarer Baugröße geht dies aber wiederum zu Lasten der wirksamen Filterflächen der Filtereinrichtung, d. h. die jeweilige Filtereinrichtung muss entsprechend klein aufbauend ausgebildet sein, um noch genügend Kammerraum zur Verfügung zu stellen zwecks Ansammlung der koalisierten Flüssigkeit vor Abfuhr über die in der Gehäusewand vorgesehene Entleerungsöffnung. Des weiteren weist die bekannte Lösung in gattungsfremder Weise keinen am unteren Ende des Gehäuses vorgesehenen Auffangbehälter auf, der die bei der Vorentfeuchtung abgeschiedene Flüssigkeit aufnehmen könnte, was wiederum einer weitestgehenden Entfeuchtung des Fluidstroms entgegensteht.

Ausgehend von diesem Stand der Technik liegt der Erfindung die Aufgabe zugrunde ein System zur Gasreinigung zur Verfügung zu stellen, das nicht nur eine besonders gute Reinigungswirkung besitzt, sondern darüber hinaus auch eine weitestgehende Entfeuchtung gewährleistet,

Erfindungsgemäß ist diese Aufgabe durch ein System gelöst, das die Merkmale des Patentanspruches 1 in seiner Gesamtheit aufweist.

Dadurch, dass gemäß dem kennzeichnenden Teil des Patentanspruches 1 das Gehäuse oberhalb des am oberen Ende des Zyklons gelegenen trennenden Bodens eine Erweiterung aufweist, die eine Kammer zur Ansammlung von an der Filtereinrichtung koalisierter Flüssigkeit bildet, die über eine in der Wand des Gehäuses vorgesehene Entleerungsöffnung aus der Kammer abführbar ist, ist eine besonders gute Reinigungswirkung erreicht und für eine weitestgehende Entfeuchtung ist vorgesehen, dass das Gehäuse am unteren Ende durch einen Auffangbehälter abgeschlossen ist, der die bei der Vorentfeuchtung abgeschiedene Flüssigkeit aufnimmt.

Insgesamt weist das System zur Gasreinigung eine Anordnung zur Vorentfeuchtung auf, die das Gas durchströmt bevor es in das eigentliche Coalescer-Gehäuse einströmt. Dergestalt befindet sich das Gas in einem vorkondizionierten Zustand, der die Restentfeuchtung durch Kolasierung an dem betreffenden Filtermedium begünstigt. Dadurch erreicht man eine derart weitgehende Entfeuchtung, dass das gereinigte Gas gegebenenfalls wieder in den Prozess zurückgeführt werden kann.

Die Benutzung eines Zyklons führt zu einer robusten und betriebssicheren Bauweise, da keine beweglichen Bauelemente erforderlich sind. Da der betreffende Zyklon in das Gehäuse, welches auch den Coalescer enthält, integriert ist, zeichnet sich das System durch eine besonders kompakte Bauweise aus.

Bei einer bevorzugten Lösung ist die Anordnung derart getroffen, dass zwischen Auffangbehälter und der Kreisringfläche des Zyklons ein einen Abflusstrichter für die am Zyklon abgeschiedene Flüssigkeit bildendes Bodenteil als untere Begrenzung des Zyklons vorgesehen ist.

Nachstehend ist die Erfindung anhand eines in der Zeichnung dargestellten Ausführungsbeispieles im einzelnen erläutert. Es zeigen:
- Fig. 1 eine Vorderansicht eines Ausführungsbeispieles des erfindungsgemäßen Systemes mit zwei im Wechsel betreibbaren Coalescer-Gehäusen;
- Fig. 2 einen schematisch vereinfacht gezeichnete Längsschnitt eines Coalescer-Gehäuses des Ausführungsbeispieles;
- Fig. 3 einen der Fig. 2 ähnlichen Längsschnitt, wobei jedoch das Coalescer-Gehäuse gegenüber Fig. 2 um 180° verdreht und ohne darin befindliche Filtereinrichtung dargestellt ist;
- Fig. 4 einen Querschnitt entsprechend der Schnittlinie IV-IV von Fig. 3 und
- Fig. 5 eine perspektivisch und auseinandergezogen gezeichnete Darstellung, in der von einer für das erfindungsgemäße System benutzbaren Filtereinrichtung lediglich Filtermedien sowie stabilisierende Abstützelemente gezeigt sind.

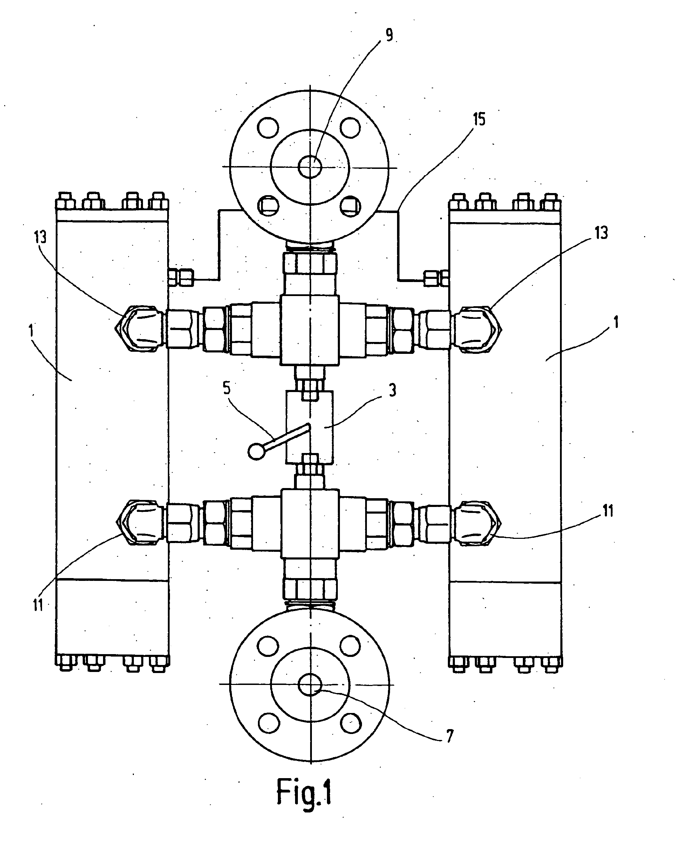

Nachstehend ist die Erfindung anhand eines Ausführungsbeispieles erläutert, bei dem zwei Coalescer-Gehäuse 1, die bis auf eine zueinander spiegelbildliche Anordnung von Gehäuseöffnungen gleich ausgebildet sind, benutzt werden. Den Gehäusen 1 ist eine Umschaltarmatur 3 zugeordnet, die in der in der Technik an sich bekannten Art und Weise eine Umschaltung des den Gehäusen 1 zugeführten Gasstromes und des daraus austretenden Gasstromes in der Weise ermöglicht, dass abwechselnd das eine oder das andere Gehäuse 1 aktiviert ist. Wie aus Fig. 1 zu ersehen, weist die Umschaltarmatur 3 als Steuerelement einen Umschalthebel 5 auf, von dessen Schaltstellung abhängend die Gasströmung von einer Eintrittsarmatur 7 in das eine oder andere Gehäuse eingeleitet wird, von welchem der Gasstrom über eine Austrittsarmatur 9 abgegeben wird. Der Eintritt des Gases erfolgt an den Gehäusen 1 jeweils über eine Einströmöffnung 11. Der Austritt des gereinigten Gasstromes aus dem jeweiligen Gehäuse 1 erfolgt über eine Ausströmöffnung 13. Eine sich zwischen den Gehäusen 1 erstrekkende Druckausgleichsleitung ist in Fig. 1 mit 15 bezeichnet.

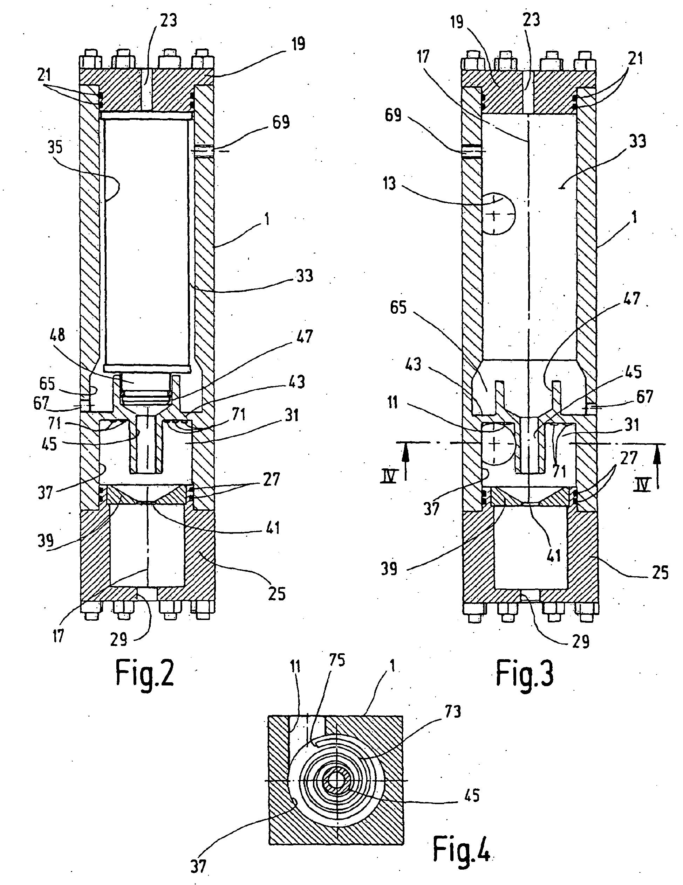

Fig. 2 bis 4 zeigen nähere Einzelheiten eines Ausführungsbeispieles des beim erfindungsgemäßen System benutzbaren Coalescer-Gehäuses 1. Wie ersichtlich ist das Gehäuse 1 als langgestreckter, im Umriss quadratischer Körper gestaltet, dessen Längsachse mit 17 bezeichnet ist. Bei der normalen Einbauposition des jeweiligen Gehäuses 1 ist die Längsachse 17 vertikal ausgerichtet. Am oberen Ende ist das Gehäuse 1 durch ein mit ihm verschraubtes Deckelteil 19 abgeschlossen, wobei Dichtelemente 21 eine druckfeste Abdichtung bilden. Eine zentrale Entlüftungsbohrung im Deckelteil 19 ist mit 23 bezeichnet.

Am entgegengesetzten unteren Ende ist das Gehäuse 1 durch einen mit ihm verschraubten Auffangbehälter 25 abgeschlossen, wobei ebenfalls Dichtelemente 27 eine druckfeste Abdichtung zwischen Auffangbehälter 25 und Gehäuse 1 bilden. An der Unterseite weist der Auffangbehälter 25 eine Entleerungsöffnung 29 auf.

Die verschiedenen Längenabschnitte des Innenraumes des Gehäuses 1 sind jeweils kreiszylindrisch gestaltet, wobei der Innenraum des Gehäuses 1 grundsätzlich in zwei Räume unterteilt ist, nämlich einen ersten Raum 31, der sich an die Einströmöffnung 11 anschließt und in den das zu reinigende Gas einströmt, und einen zweiten Raum 33, siehe Fig. 2, in dem sich das gereinigte Gas befindet, das von diesem zweiten Raum 33 über die Ausströmöffnung 13 austritt.

Erster Raum 33 und zweiter Raum 33 sind durch eine vom Gas durchströmbare Filtereinrichtung 35 voneinander getrennt, die in Fig. 2 lediglich in ihrem Umriss schematisiert angedeutet ist.

Der sich an die Einströmöffnung 11 unmittelbar anschließende Teil des ersten Raumes 31 bildet einen Zyklon zur Vorentfeuchtung des Gases. Zu diesem Zweck ist die Einströmöffnung 11 auf eine innere Kreisringfläche 37 des Gehäuses 1 derart ausgerichtet, dass die Kreisringfläche 37 durch den über die Einströmöffnung 11 eintretenden Gasstrom so angeströmt wird, dass eine Zyklonwirkung entsteht, die eine Vorentfeuchtung aufgrund der Zentrifugalkräfte bewirkt, die auf die entlang der Kreisringfläche 37 verlaufende Strömung einwirken.

Wie Fig. 2 und 3 zeigen, befindet sich zwischen dem oberen Ende des Auffangbehälters 25 und dem unteren Ende der Kreisringfläche 37 des Zyklons ein Bodenteil 39, das für den Zyklon einen trichterartig vertieften Boden mit einer zentralen Abflussöffnung 41 bildet, über die im Zyklon abgeschiedene Flüssigkeit in den Auffangbehälter 25 abfließt.

Oberhalb der Kreisringfläche 37 weist das Gehäuse 1 einen den ersten Raum 31 vom zweiten Raum 33 trennenden Boden 43 auf, an dem ein einen Durchgang 45 bildender Sitz 47 ausgebildet ist, der eine Aufnahme für einen Anschlussstutzen 48 (siehe Fig. 2) der Filtereinrichtung 35 bildet. Dieser Anschlussstutzen 48 führt in den inneren Hohlraum der Filtereinrichtung 35, so dass das im Zyklon vorentfeuchtete Gas aus dem Zyklon in das Innere der Filtereinrichtung 35 gelangt.

Wie sich gezeigt hat, ergibt sich eine besonders gute Entfeuchtungswirkung des Zyklons, wenn sich an der die Zyklon- oder Strömungskammer oben begrenzten Wand ein reliefartiges Profil in Form einer Spirale befindet. Wie aus Fig. 2 bis 4 ersichtlich, ist zu diesem Zweck die Unterseite des Bodens 43, der die Strömungskammer nach oben begrenzt, nicht glattflächig ausgebildet, sondern weist ein Profil auf, das durch eine vorspringende Rippe 71 mit spiraligem Verlauf gebildet ist, zwischen deren Windungen sich Rillen befinden. Wie Fig. 4 zeigt, erstreckt sich die so gebildete Spirale 73 von ihrem äußeren, an der Einströmöffnung 11 gelegenen Anfang 75 spiralig nach innen und zwar entgegen der Richtung der Zyklonströmung an der Kreisringfläche 37. Eine derartige Konfiguration begünstigt die Anlagerung von Tröpfchen, die auf das Bodenteil 39 abfallen. Je nach Strömungsverhältnissen kommt eine unterschiedliche Anzahl von Spiralumdrehungen in Betracht.

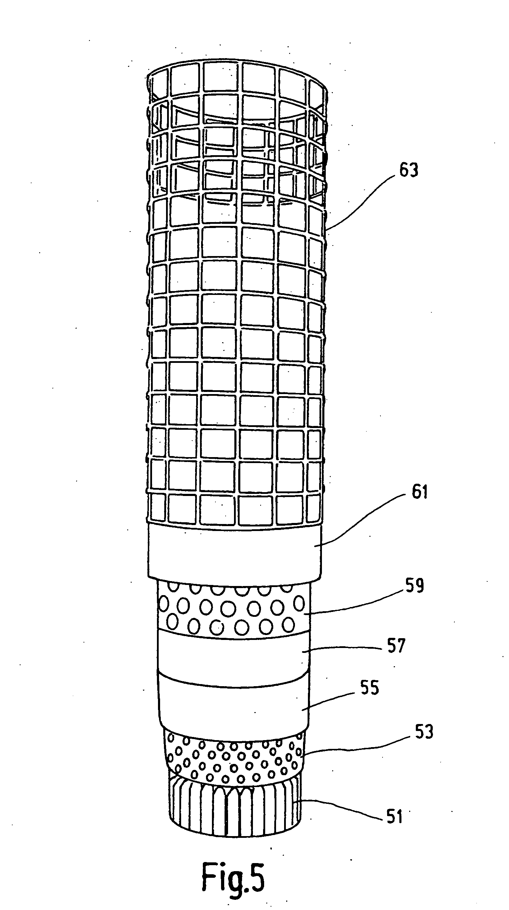

Wie in Fig. 5 verdeutlicht, ist der innere Hohlraum der Filtereinrichtung 35 von Filtermedien und Abstützelementen umgeben, die von dem vorentfeuchteten Gas von innen nach außen durchströmt werden, wobei die Filtermedien so beschaffen sind, dass sowohl eine Abscheidung von Feststoffpartikeln als auch eine Entfeuchtung durch Abscheidung koalisierter Flüssigkeit erfolgt. Zu diesem Zweck weist die Filtereinrichtung als innere Lagen, die zur Partikelabscheidung dienen, sterngefaltete Drahtgewebe und sterngefaltetes Filterpapier auf. Diese Lagen sind in Fig. 5 mit 51 bezeichnet. Nach außen schließt sich ein Lochblech 53 zur Stabilisierung an. Über diesem befindet sich ein Glasfasergewebe 55 zur Koalisierung. Es folgt ein Drahtgewebe 57 zur Drainage, über dem ein Lochblech 59 zur Stabilisierung angeordnet ist. Über diesem befindet sich ein Nadelfilz 61 zur Flüssigkeitsableitung. Ein Metallkorb 63 bildet schließlich die äußere Einfassung der Baueinheit.

Wie Fig. 2 und 3 zeigen, befindet sich oberhalb des Bodens 43 im Gehäuse 1 eine zum zweiten Raum 33 gehörende Erweiterung, die eine Kammer 65 zur Ansammlung von an der Filtereinrichtung 35 koalisierter Flüssigkeit bildet, die über eine Abflussöffnung 67 abführbar ist. Eine für den Anschluss der Druckausgleichsleitung 15 (Fig. 1) vorgesehene Öffnung im oberen Bereich des Gehäuses 1 ist mit 69 bezeichnet. Es versteht sich, dass die am Gehäuse 1 außer der Einströmöffnung 11 und der Ausströmöffnung 13 zusätzlich vorgesehenen Öffnungen 23, 29, 67 und 69 jeweils mit nicht gezeigten, druckfesten Armaturen versehen sind.

Während die Erfindung anhand eines Beispieles beschrieben ist, bei dem zwei Coalescer-Gehäuse 1 im Wechsel durch Betätigen einer Umschaltarmatur 3 betreibbar sind, versteht sich, dass ein andersartiger Systemaufbau mit nur einem Coalescer-Gehäuse oder einer anderen Anzahl von Gehäusen vorgesehen sein kann. Anstelle eines in das Gehäuse 1 integrierten Zyklons könnte die Vorentfeuchtung andersartig erfolgen, beispielsweise mit einem oder mehreren, dem Gehäuse vorgeschalteten Zyklonen. Die Benutzung zueinander nebengeschalteter Zyklone kann ebenfalls vorgesehen sein, insbesondere in Fällen, wo Gasströme unterschiedlicher Volumenströme oder unterschiedlicher Strömungsgeschwindigkeit zu handhaben sind.

## Patentansprüche

1. System zur Gasreinigung, das mindestens ein Gehäuse (1) aufweist, mit einem ersten Raum (31), in den das zu reinigende Gas einströmt, und mit einem zweiten Raum (33), aus dem das gereinigte Gas austritt, wobei zwischen den genannten Räumen (31, 33) eine vom Gas durchströmbare Filtereinrichtung (35) angeordnet ist, welche Filtermedien sowohl zur Absonderung von Feststoffpartikeln als auch zur Entfeuchtung des Gases durch Abscheidung koalisierter Flüssigkeit aufweist, wobei das System stromaufwärts der Filtereinrichtung (35) eine Anordnung zur Vorentfeuchtung des Gases in Form mindestens eines in dem Gehäuse (1) aufgenommenen Zyklons (11, 37) aufweist, wobei das Gehäuse (1) in normaler Einbauposition eine zumindest näherungsweise vertikal verlaufende Längsachse (17) definiert, wobei der erste Raum (31) im unteren Abschnitt des Gehäuses (1) gelegen und seitlich durch eine Kreisringfläche (37) begrenzt ist, die vorzugsweise zur Längsachse (17) konzentrisch ist, wobei das Gehäuse (1) am unteren Ende durch einen Auffangbehälter (25) abgeschlossen ist, der die bei der Vorentfeuchtung abgeschiedene Flüssigkeit aufnimmt, wobei im Gehäuse (1) die sich entlang von dessen Längsachse (17) erstreckende Filtereinrichtung (35) aufnehmbar ist, die für das zu reinigende Gas einen inneren hohlraum aufweist, der von den Filtermedien (51, 55, 57, 61) umgeben ist, zwischen deren Aussenseite und der Innenwand des Gehäuses (1) sich der zweite Raum (33) befindet, und wobei das Gehäuse (1) am oberen Ende der den Zyklon bildenden Kreisringfläche (37) einen den ersten Raum (31) vom zweiten Raum (33) trennenden Boden (43) aufweist, an dem ein einen Durchgang (45) bildender Sitz (47) ausgebildet ist, in den ein in den inneren Hohlraum der Filtereinrichtung führender Anschlussstutzen (48) der Filtereinrichtung (35) einsetzbar ist, über den das vorentfeuchtete Gas aus dem Zyklon (11, 37) in den Hohlraum der Filtereinrichtung (35) einströmt, **dadurch gekennzeichnet, dass** das Gehäuse (1) oberhalb des am oberen Ende des Zyklons gelegenen trennenden Bodens (43) eine Erweiterung aufweist, die eine Kammer (65) zur Ansammlung von an der Filtereinrichtung (35) koalisierter Flüssigkeit bildet, die über eine in der Wand des Gehäuses (1) vorgesehene Entleerungsöffnung (67) aus der Kammer (65) abführbar ist.

2. System nach Anspruch 1, **dadurch gekennzeichnet, dass** am Gehäuse (1) eine Einströmöffnung (11) für das zu reinigende Gas derart angeordnet ist, dass dieses die Kreisringfläche (37) tangential anströmt, so dass diese einen Zyklon zur Vorentfeuchtung bildet.

3. System nach Anspruch 1 oder 2, **dadurch gekennzeichnet, dass** zwischen Auffangbehälter (25) und der Kreisringfläche (37) des Zyklons ein einen Abflusstrichter für die am Zyklon abgeschiedene Flüssigkeit bildendes Bodenteil (39) als untere Begrenzung des Zyklons vorgesehen ist.

4. System nach einem der Ansprüche 1 bis 3, **dadurch gekennzeichnet, dass** an der die obere Begrenzung des Zyklons bittenden Unterseite des Bodens (43) eine Spirale (73) vorgesehen ist, die aus einer aus der Fläche vorspringenden Rippe (71) mit dazwischen liegenden Rillen gebildet ist.

5. System nach Anspruch 4, **dadurch gekennzeichnet, dass** die Spirale (73) von ihrem äußeren, an der Einströmöffnung (11) befindlichen Ende (75) entgegen der Richtung der Strömung an der Ringfläche (37) nach innen verläuft.

## Claims

1. A system for cleaning gas which comprises at least one housing (1) with a first chamber (31) into which the gas to be cleaned flows, and with a second chamber (33) from which the cleaned gas exits, a filter device (35) through which gas can flow being disposed between the aforementioned chambers (31, 33), which has filter media both for separating out particles of solids and for dehumidifying the gas by separating out coalesced liquid, the system having upstream of the filter device (35) an arrangement for the pre-dehumidification of the gas in the form of at least one cyclone (11, 37) accommodated within the housing (1), in the normal fitted position the housing (1) defining an at least approximately vertically extending longitudinal axis (17), the first chamber (31) being positioned in the lower section of the housing (1) and being delimited to the side by a circular area (37) which is preferably concentric to the longitudinal axis (17), the housing (1) being closed off at the lower end by a collection container (25) which receives the liquid separated off during the pre-dehumidification, within the housing (1) it being possible to accommodate the filter device (35) extending along the longitudinal axis (17) of the latter which has for the gas to be cleaned an inner cavity which is surrounded by the filter media (51, 55, 57, 61), between the outside of which and the inner wall of the housing (1) the second chamber (33) being located, and the housing (1) having on the upper end of the circular area (37) forming the cyclone a base (43) separating the first chamber (31) from the second chamber (33) and on which a seat (47) forming a passage (45) is formed into which a connecting piece (48) of the filter device (35) leading into the inner cavity of the filter device can be inserted via which the pre-dehumidified gas flows out of the cyclone (11, 37) into the cavity of the filter device (35), **characterised in that** the housing (1) has above the separating base (43) positioned at the upper end of the cyclone a widening which forms a chamber (65) for collecting liquid coalesced on the filter device (35) which can be discharged from the chamber (65) via an emptying opening (67) provided in the wall of the housing (1).

2. The system according to Claim 1, **characterised in that** there is disposed on the housing (1) an inflow opening (11) for the gas to be cleaned in such a way that the latter flows against the circular area (37) tangentially so that the latter forms a cyclone for the pre-dehumidification.

3. The system according to Claim 1 or 2, **characterised in that** between the collection container (25) and the circular area (37) of the cyclone a base part (39) forming a flow-off funnel for the liquid separated off on the cyclone is provided as the lower delimitation of the cyclone.

4. The system according to any of Claims 1 to 3, **characterised in that** on the lower side of the base (43) forming the upper delimitation of the cyclone a spiral (73) is provided which is formed from a rib (71) projecting from the surface with grooves lying in between.

5. The system according to Claim 4, **characterised in that** the spiral (73) extends inwardly from its outer end (75) located on the inflow opening (11) against the direction of flow on the circular area (37).

## Revendications

1. Système d'épuration de gaz, qui a au moins une enveloppe (1) comprenant un premier espace (31), dans lequel le gaz à épurer entre, et un deuxième espace (33), dont le gaz épuré sort, dans lequel entre lesdits espaces (31, 33) est disposé un dispositif (35) de filtration à travers lequel le gaz peut passer et qui a des milieux filtrants, tant pour la séparation des particules de matière solide qu'également pour la déshumidification du gaz par dépôt de liquide coalescé, le système ayant en amont du dispositif (35) de filtration un agencement pour la déshumidification préalable du gaz sous la forme d'au moins un cyclone (11, 37) reçu dans l'enveloppe (1), l'enveloppe (1) définissant, dans la position normale de montage, un axe (17) longitudinal s'étendant au moins à peu près verticalement, le premier espace (31) étant dans la partie inférieure de l'enveloppe (1) et étant délimité latéralement par une surface (37) annulaire circulaire qui, de préférence, est concentrique à l'axe (17) longitudinal, l'enveloppe (1) étant fermée à l'extrémité inférieure par un récipient (25) de réception qui reçoit le liquide qui s'est déposé lors de la déshumidification préalable, dans lequel dans l'enveloppe (1) peut être reçue le dispositif (35) de filtration s'étendant le long de son axe (17) longitudinal et ayant, pour le gaz à épurer, un espace creux intérieur qui est entouré des milieux (51, 55, 57, 61) filtrants, entre le côté extérieur desquels et la paroi intérieure de l'enveloppe (1) se trouve le deuxième espace (33), et dans lequel l'enveloppe (1) a, à l'extrémité supérieure de la surface (37) annulaire circulaire formant le cyclone, un fond (43) séparant le premier espace (31) du deuxième espace (33) et sur lequel est constitué un siège (47) formant un passage (45), dans lequel une tubulure (48) de raccordement du dispositif (35) de filtration menant à l'espace creux intérieur du dispositif de filtration peut être insérée, tubulure par laquelle le gaz, déshumidifié au préalable, va du cyclone (11, 37) à l'espace creux du dispositif (35) de filtration, **caractérisé en ce que** l'enveloppe (1) a, au-dessus du fond (43) de séparation, mis à l'extrémité supérieure du cyclone, un élargissement qui forme une chambre (65) pour l'accumulation de liquide coalescé sur le dispositif (35) de filtration, liquide qui peut être évacué de la chambre (65) par une ouverture (67) de vidange prévue dans la paroi de l'enveloppe (1).

2. Système suivant la revendication 1, **caractérisé en ce que** sur l'enveloppe (1) est disposée une ouverture (11) d'entrée du gaz à épurer, de manière à ce que celui-ci afflue tangentiellement à la surface (37) annulaire circulaire, de manière à ce que celle-ci forme un cyclone pour la déshumidification préalable.

3. Système suivant la revendication 1 ou 2, **caractérisé en ce qu'**entre le récipient (25) de réception et la surface (37) annulaire circulaire du cyclone est prévu, en tant que limitation inférieure du cyclone, une partie (39) de fond formant un entonnoir d'évacuation du liquide séparé dans le cyclone.

4. Système suivant l'une des revendications 1 à 3, **caractérisé en ce qu'**il est prévu, du côté inférieur du fond formant la limitation supérieure du cyclone, une spirale (73) qui est formée d'une rainure (71) en saillie de la surface, avec interposition de rainures.

5. Système suivant la revendication 4, **caractérisé en ce que** la spirale (73) s'étend de son extrémité (75) extérieure se trouvant sur l'ouverture (11) d'entrée vers l'intérieur dans le sens contraire à l'écoulement sur la surface (37) annulaire.
